# EUROPEAN PATENT APPLICATION

(11) **EP 4 837 787 A1**
(43) Date of publication of application: **11.11.2026**
(21) Application number: 26177464.0
(22) Date of filing: 08.05.2026
(51) Int. Cl.: B60R 9/10, B60R 9/048, B62H 3/02

(54) **ANTI-THEFT BICYCLE CARGO RACK FIXING SYSTEM**

(30) Priority: 09.05.2025 TW 114117579
(71) Applicant: King Rack Industrial Co., Ltd., Taichung City (TW)
(72) Inventor: WANG, CHIU-KUEI, 437 Taichung City (TW); ESPESSET, HUGUES, 81160 ST Juery (FR); FRÉDÉRIC, GIROD, 81160 ST Juery (FR)
(74) Representative: Müller Hoffmann & Partner

(57) **Abstract**

The present disclosure provides an anti-theft bicycle cargo rack fixing system (100) for securing a bicycle to various cargo racks. The system (100) includes an adjustable clamping device (110), an adjustment assembly (120), and a clamping connector. The adjustable clamping device (110) includes a clamping sleeve (111) and a clamping inner tube (112), the clamping sleeve (111) having a longitudinal opening (113) and being fitted over the exterior of the clamping inner tube (112), with a branch connector (114) integrally formed on a side wall of the clamping sleeve (111). The adjustment assembly (120) includes a fixing element (121) and a tensioning screw rod (122) that passes through the branch connector (114) and is threadedly engaged with a threaded mating component (133) within the clamping connector. The fixing base (131) is connected to the branch connector (114) in an angle-adjustable manner, such that a user is enabled to adjust the angle of the fixing base (131) so that the knob (132) is oriented toward a tube of the bicycle. When the strap (134) secures the bicycle to the fixing base (131), the tube of the bicycle is positioned adjacent to the knob (132) and forms a physical obstruction, such that the knob (132) cannot be rotated to loosen the clamping device (110), and a structural anti-theft function is achieved.

## Description

### FIELD

The present disclosure relates to bicycle transportation securing devices, and more particularly to a fixing system for bicycle cargo racks that is installable on tubes of various cargo racks, and the fixing system has a structural anti-theft function.

### BACKGROUND

With the growing popularity of cycling, there is an increasing demand for transporting bicycles by a vehicle(s) to various locations for recreation or competition. Currently available cargo racks are primarily categorized as roof-mounted or rear-mounted systems. While these racks provide basic structural support, they often fall short in securing bicycles effectively.

Existing bicycle securing methods mainly rely on tie-down straps, bands, or simple clamping mechanisms, each with significant limitations. First, most securing mechanisms cannot accommodate bicycle frame tubes of varying diameters, resulting in either insufficient attachment or excessive compression that damages the bicycle. Second, strap-based systems typically involve tedious securing procedures, offer limited adjustability, and are prone to loosening during transit. Third, many current securing devices lack flexibility, making it difficult to adapt to different bicycle models and rack configurations.

Moreover, most commercially available cargo rack securing systems feature integrated designs that limit user customization. These systems generally lack precise adjustment mechanisms, making it difficult to achieve secure attachment without risking damage to the bicycle.

Furthermore, most existing clamping devices employ hand-turnable knobs for ease of operation, which results in severely insufficient anti-theft security, as anyone can easily loosen the knob to steal an expensive bicycle or even remove the clamp along with it. Although knobs with built-in lock cylinders are available on the market, they are structurally complex and costly, and users are required to carry keys, often encountering problems, such as lost keys or corroded keyholes that prevent disassembly. More importantly, existing securing devices lack the design concept of utilizing the bicycle structure itself for anti-theft purposes and are unable to create a physical obstruction against operating components by adjusting the orientation of the device, resulting in limited anti-theft effectiveness that relies on additional locking accessories.

Consequently, there is a critical need for a highly adjustable, versatile, and reliable clamping device for cargo racks that could accommodate various types of cargo racks and bicycles, while providing secure attachment, simple operation, and flexible application.

### SUMMARY

In view of the above, there is a need for an anti-theft bicycle cargo rack fixing system that may be flexibly adjusted and securely installed on various rack tubes, compatible with different types of cargo racks and bicycles, and offering safe and reliable securing performance. The core of the present disclosure lies in that the fixing base is connected to the adjustable clamping device in an angle-adjustable manner, such that a user is enabled to set the orientation of the knob relative to the bicycle. When the strap secures the bicycle, a tube of the bicycle is positioned adjacent to the knob and forms a physical obstruction, such that a structural anti-theft effect is achieved without requiring additional locks, while also featuring simple operation and versatile configuration options.

According to the present disclosure, a clamping device for cargo racks is provided. The clamping device, adapted to be fixed onto a cargo rack, includes: an adjustment assembly that includes a fixing element and a tensioning screw rod, the tensioning screw rod is provided with a threaded section, and one end of the tensioning screw rod distal from the threaded section is fixed to the fixing element; and an adjustable clamping device that includes a clamping sleeve and a clamping inner tube. The clamping sleeve is provided with a longitudinal opening and is fitted over an exterior of the clamping inner tube, a side wall of the clamping sleeve is provided with an integrally formed branch connector, and when the clamping sleeve is fitted over the exterior of the clamping inner tube, the clamping sleeve, through elastic deformation enabled by the longitudinal opening, contracts under radial pressure to cause an inner wall of the clamping sleeve to be pressed tightly against an outer surface of the clamping inner tube. The fixing element is firmly connected to one side of the branch connector to allow the tensioning screw rod to pass through the branch connector, and the threaded section is threadedly engaged with a threaded mating component, such that when the threaded mating component is rotated relative to the tensioning screw rod, the tensioning screw rod generates axial displacement, which adjusts a width of the longitudinal opening and further controls a tightening degree of the clamping sleeve against the clamping inner tube.

In one implementation, the clamping device for cargo racks further includes a locking element, which is provided with a connecting lug containing a through hole. One end of the tensioning screw rod proximate to the threaded section passes through the through hole and is firmly connected to the locking element, the connecting lug is inserted into the longitudinal opening of the clamping sleeve, such that when the tensioning screw rod generates axial displacement, the locking element is driven to move, which adjusts the width of the longitudinal opening, and a thickness of the connecting lug serves to limit a minimum opening degree of the longitudinal opening, such that the clamping sleeve is prevented from over-contraction and the clamping inner tube is protected from damage due to excessive clamping force.

In one implementation, the fixing element includes: a first component and a second component, a surface of the first component is provided with a plurality of radially arranged first serrated structures, a corresponding surface of the second component is provided with a plurality of radially arranged second serrated structures, and the first serrated structures and the second serrated structures engage with each other to form a locking structure that prevents relative rotation between the first component and the second component, and also prevents relative sliding or rotation under applied force.

In one implementation, the clamping device for cargo racks further includes an extension connecting rod. One end of the extension connecting rod is connected to the branch connector of the adjustable clamping device, and the other end of the extension connecting rod is connected to a clamping connector. The clamping connector includes the threaded mating component and a rotatable knob, the threaded mating component is fixed within the knob and is threadedly engaged with the tensioning screw rod, and the tensioning screw rod extends through the branch connector and the extension connecting rod to the clamping connector, such that when the knob drives the threaded mating component to rotate, the tensioning screw rod generates axial displacement, as one end of the tensioning screw rod is fixed to the fixing element, and the axial displacement is transmitted through the extension connecting rod to the adjustable clamping device, which adjusts the width of the longitudinal opening.

The present disclosure further provides a fixing system for bicycle cargo racks. The fixing system for bicycle cargo racks, disposed on a tube of a cargo rack, includes: an adjustable clamping device that includes a clamping sleeve and a clamping inner tube. The clamping sleeve is provided with a longitudinal opening and is fitted over an exterior of the clamping inner tube, a side wall of the clamping sleeve is provided with an integrally formed branch connector, and when the clamping sleeve is fitted over the exterior of the clamping inner tube, the clamping sleeve, through elastic deformation enabled by the longitudinal opening, contracts under radial pressure to cause an inner wall of the clamping sleeve to be pressed tightly against an outer surface of the clamping inner tube, and the clamping inner tube is fitted over the tube of the cargo rack; an adjustment assembly that includes a fixing element and a tensioning screw rod. The fixing element is fixed to one end of the branch connector, the tensioning screw rod is provided with a threaded section, and one end of the tensioning screw rod distal from the threaded section is fixed to the fixing element; and a clamping connector, connected to the other end of the branch connector, that includes: a fixing base, directly connected to the other end of the branch connector; a knob, mounted on one side of the fixing base and rotatable relative to the fixing base; a threaded mating component fixed within the knob and threadedly engaged with the threaded section; and a strap, disposed on the fixing base for securing a bicycle. The tensioning screw rod passes through the branch connector and extends to the clamping connector, such that when the knob drives the threaded mating component to rotate relative to the tensioning screw rod, the tensioning screw rod generates axial displacement, which adjusts a width of the longitudinal opening and further controls a tightening degree of the clamping sleeve against the clamping inner tube, such that the fixing system is enabled to be securely fixed to the bicycle cargo rack.

In one implementation, one side of the fixing base is provided with a connecting tube body, which is inserted into and fixed to the other end of the branch connector.

In one implementation, an outer surface of the connecting tube body is provided with a plurality of first protruding structures, an inner wall of the branch connector is provided with a plurality of second protruding structures corresponding to the plurality of first protruding structures, and the first protruding structures and the second protruding structures cooperate with each other to form a plurality of angular limiting positions, such that the fixing base is enabled to rotate relative to the branch connector and to be fixed at predetermined angular positions.

In one implementation, the strap is detachable, and an inner surface of the strap is provided with a plurality of serrated structures; an upper portion of the fixing base is provided with a through hole for the strap to pass through; and a bottom portion of the fixing base is provided with an operable engaging assembly, the engaging assembly that includes an engaging structure that cooperates with the serrated structures of the strap and a manually operable release portion. The strap passes through the through hole and is folded back, such that the serrated structures engage with the engaging assembly to secure the bicycle to the fixing base, and when the release portion is manually operated, engagement between the engaging structure and the serrated structures is released, such that the strap is allowed to be withdrawn.

In one implementation, one end of the strap is provided with a fastening structure, and the other end is provided with a fastening hole, such that after the strap is inserted into the through hole of the fixing base, the fastening hole engages with the fastening structure to form a closed loop, such that the strap is allowed to be stored on the fixing base when the strap is not in use.

In one implementation, the fixing system for bicycle cargo racks further includes: an extension connecting rod. One end of the extension connecting rod is connected to the branch connector, and the other end of the extension connecting rod is connected to the fixing base of the clamping connector, the tensioning screw rod extends through the branch connector and the extension connecting rod to the clamping connector and remains threadedly engaged with the threaded mating component, such that when the knob drives the threaded mating component to rotate relative to the tensioning screw rod, the tensioning screw rod generates axial displacement, as one end of the tensioning screw rod is fixed to the fixing element and the threaded mating component is fixed within the knob, and the axial displacement is transmitted through the extension connecting rod to the adjustable clamping device, which adjusts the width of the longitudinal opening and further controls the tightening degree of the clamping sleeve against the clamping inner tube.

### BRIEF DESCRIPTION OF THE DRAWINGS

To enhance clarity regarding the technical solutions presented in the implementations of the present disclosure or in the prior art, a brief overview of the drawings necessary for describing the implementations or the prior art will be given below. It is important to note that the drawings outlined below are merely some implementations of the present disclosure, and other drawings may be obtained by those skilled in the art based on these drawings without creative efforts.
FIG. 1 is a perspective view of a clamping device for cargo racks according to the present disclosure.
FIG. 2 is an exploded view of an adjustable clamping device according to the present disclosure.
FIG. 3 is an assembly view and top view of a clamping sleeve and a clamping inner tube according to the present disclosure.
FIG. 4 is an exploded view of a clamping device for cargo racks and a locking element according to the present disclosure.
FIG. 5 is an exploded view and partial enlarged view of a fixing element according to the present disclosure.
FIG. 6 is a perspective view of a clamping device for cargo racks with an extension connecting rod according to the present disclosure.
FIG. 7 is an exploded view of a fixing system for bicycle cargo racks according to the present disclosure.
FIG. 8 is an exploded view of a connection structure between a fixing base and a branch connector according to the present disclosure.
FIG. 9 is a sectional view of a connection between a connecting tube body and a branch connector according to the present disclosure.
FIG. 10 is a schematic view of a clamping connector at a first rotation angle relative to a branch connector according to the present disclosure.
FIG. 11 is a schematic view of the clamping connector at a second rotation angle relative to the branch connector according to the present disclosure.
FIG. 12 is a schematic view illustrating a working principle of a strap according to the present disclosure.
FIG. 13 is a sectional view of the strap according to the present disclosure.
FIG. 14 is a partial enlarged view illustrating engagement details between an engaging assembly and serrated structures of a strap according to the present disclosure.
FIG. 15 is a view illustrating a fixing system for bicycle cargo racks in use when installed on a cargo rack according to the present disclosure.
FIG. 16 is a schematic view of an implementation of the fixing system for bicycle cargo racks with an extension connecting rod.
FIG. 17 is a view illustrating the fixing system with the extension connecting rod in use on a cargo rack according to the present disclosure.
FIG. 18 is a schematic view illustrating an anti-theft locked state of the present disclosure.
FIG. 19 is a perspective view of an advanced implementation of a clamping connector according to the present disclosure.

### DETAILED DESCRIPTION

The following provides a detailed description of implementations of the present disclosure with reference to the drawings.

The descriptions below include specific information pertaining to exemplary implementations exemplary implementations of the present disclosure. The drawings and their accompanying detailed description pertain only to these exemplary implementations. However, the present disclosure is not limited to these exemplary implementations. Those skilled in the art will recognize other variations and implementations of the present disclosure. Furthermore, the drawings and illustrations in the present disclosure are generally not drawn to scale and may not correspond to actual relative dimensions.

For consistency and ease of understanding, the same features are designated by the same reference numerals in the exemplary drawings. However, features in different implementations may vary in other aspects and should not be narrowly construed as limited to the features shown in the drawings.

The terms used in the present disclosure are solely for describing particular implementations and are not intended to limit the scope of the present disclosure. Unless otherwise specified, singular forms, such as "a," "the," and "said," also include plural forms. The terms "comprise," "comprises," "comprising," "include," "includes," "including," "have," "has," or "having" used herein specify the presence of a feature, region, integer, step, operation, element, and/or component, but do not preclude the presence or addition of one or more other features, regions, integers, steps, operations, elements, components, and/or groups thereof.

The term "and/or" includes any and all combinations of one or more of the associated listed items. Although terms, such as "first," "second," and "third," may be used herein to describe various elements, components, regions, parts and/or sections, these elements, components, regions, parts and/or sections should not be limited by these terms. These terms are used merely to distinguish one element, component, region, part or section from another element, component, region, layer or section. Accordingly, without departing from the teachings of the present disclosure, a first element, component, region, part or section discussed below may also be referred to as a second element, component, region, layer or section.

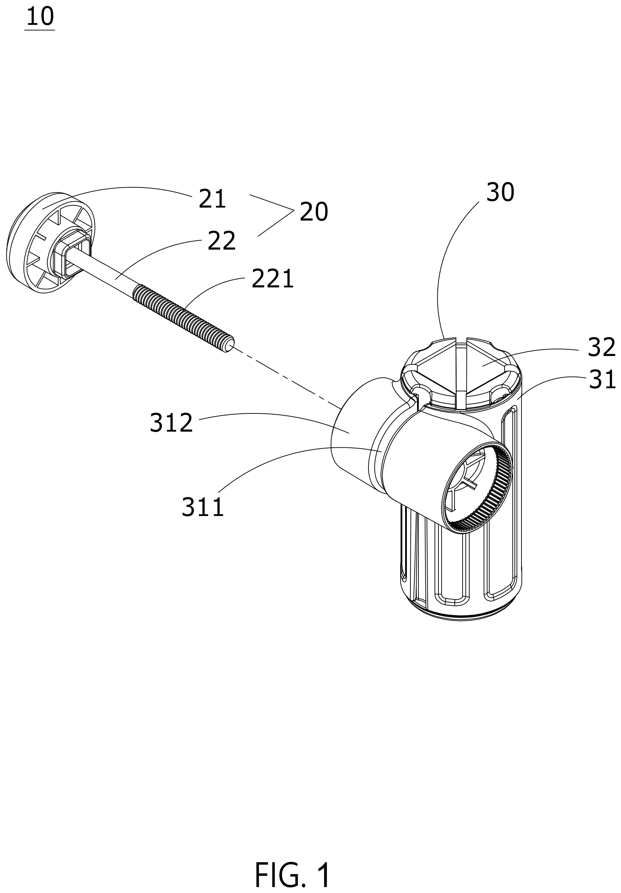

As shown in FIG. 1, a clamping device for cargo racks 10 primarily includes an adjustment assembly 20 and an adjustable clamping device 30. The adjustable clamping device 30 includes a clamping sleeve 31 and a clamping inner tube 32. The clamping inner tube 32 is disposed within the clamping sleeve 31, forming a coaxial arrangement. The clamping sleeve 31 is provided with a longitudinal opening 311 along the axial direction, such that clamping sleeve 31 is enabled to have radial elastic deformation capability. An outer wall of the clamping sleeve 31 is integrally formed with an outwardly extending branch connector 312, which forms a T-shaped connection structure with the clamping sleeve 31. The adjustment assembly 20 includes a tensioning screw rod 22 and a fixing element 21. A threaded section 221 is formed on a portion of the surface of the tensioning screw rod 22, with one end fixed to the fixing element 21, while the fixing element 21 is securely connected to one end of the branch connector 312. The tensioning screw rod 22 passes through the branch connector 312, and the threaded section 221 forms a helical transmission mechanism with a threaded mating component. The threaded mating component may be, for example, a nut with corresponding threads or other elements that may threadedly engage with the threaded section 221, and is not limited thereto. When an operator rotates the threaded mating component, since one end of the tensioning screw rod 22 is constrained by the fixing element 21, the helical transmission action causes the tensioning screw rod 22 to generate axial displacement in lateral directions. This displacement directly affects the opening degree of the longitudinal opening 311 of the clamping sleeve 31, and thus precisely controls the radial pressure of the clamping sleeve 31 against the clamping inner tube 32. Through this design, the operator may adjust the clamping force according to the actual diameter of the cargo rack tube, such that stability and safety of the device during use are ensured.

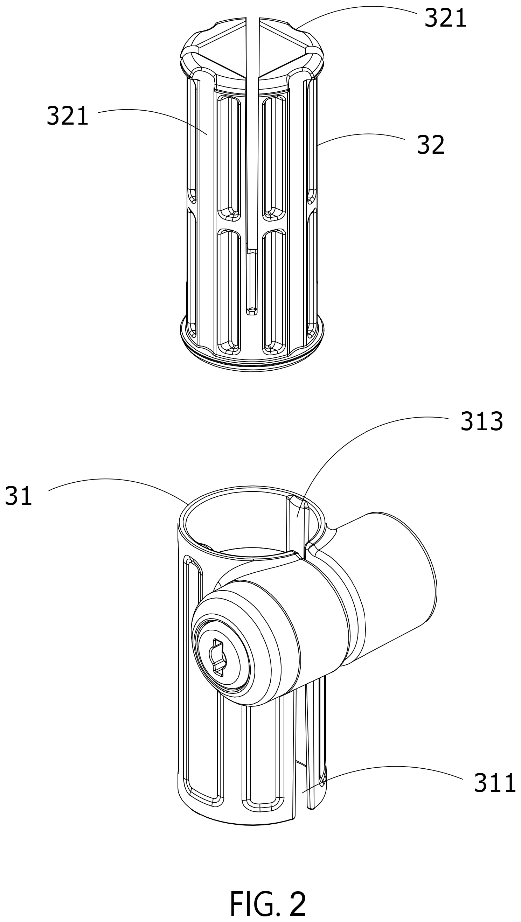

As shown in FIG. 2, the clamping sleeve 31 has a tubular design with an annular structure at the upper top end, while the bottom is provided with the longitudinal opening 311 extending axially through the clamping sleeve 31, making the entire clamping sleeve 31 present a C-shaped open structure. The branch connector 312 extending outwardly is integrally formed on a side wall of the clamping sleeve 31. An inner surface of the clamping sleeve 31 is provided with a plurality of circumferentially distributed engaging protrusions 313, which are arranged along the inner wall of the clamping sleeve 31 to form a specific engaging structure. The clamping inner tube 32 is a tubular body having an opening, and an outer surface is provided with external engaging grooves 321 corresponding to the engaging protrusions 313 of the clamping sleeve 31. These grooves surround the periphery of the clamping inner tube 32 at specific intervals, and their shapes mate with the engaging protrusions 313 of the clamping sleeve 31.

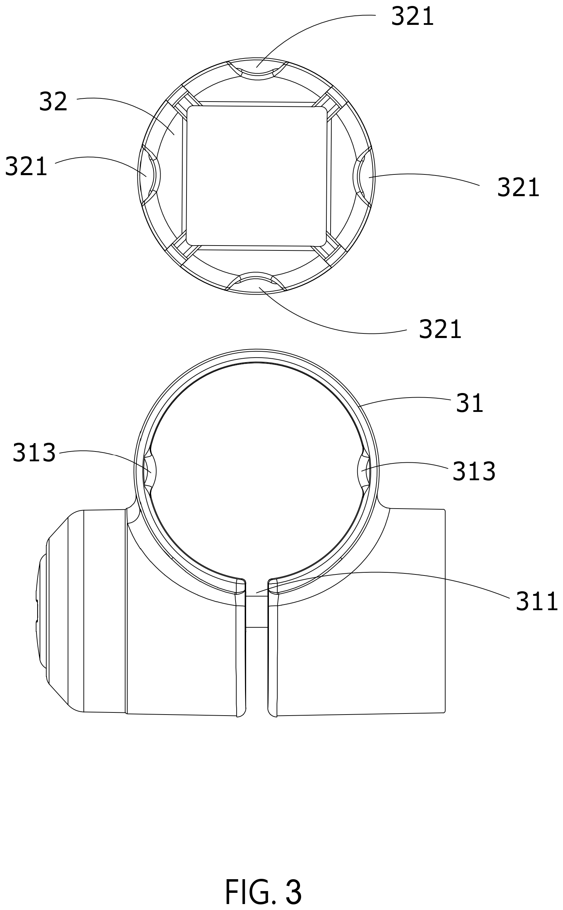

Referring to FIG. 3, to further illustrate the state in which the clamping sleeve 31 is fitted over the clamping inner tube 32, FIG. 3 shows the clamping sleeve 31 and the clamping inner tube 32 separately for structural comparison. As shown, when the clamping sleeve 31 is fitted over the exterior of the clamping inner tube 32, the engaging protrusions 313 on the inner surface of the clamping sleeve 31 embed into the engaging grooves 321 on the outer surface of the clamping inner tube 32, forming a rotatable engaging relationship between them that enables the clamping sleeve 31 to rotate relative to the clamping inner tube 32 within a limited angle range. This rotation is constrained by the engaging structure, as the engaging protrusions 313 contact the engaging grooves 321 during rotation, thus limiting the rotation angle. When the longitudinal opening 311 of the clamping sleeve 31 contracts, the engaging protrusions 313 of the clamping sleeve 31 embed more tightly into the engaging grooves 321 of the clamping inner tube 32, increasing the rotational friction between them and making relative movement difficult. Conversely, when the longitudinal opening 311 expands, the contact pressure of the engaging structure decreases, such that the clamping sleeve 31 is allowed to rotate more easily relative to the clamping inner tube 32, thus achieving the purpose of adjusting direction and position.

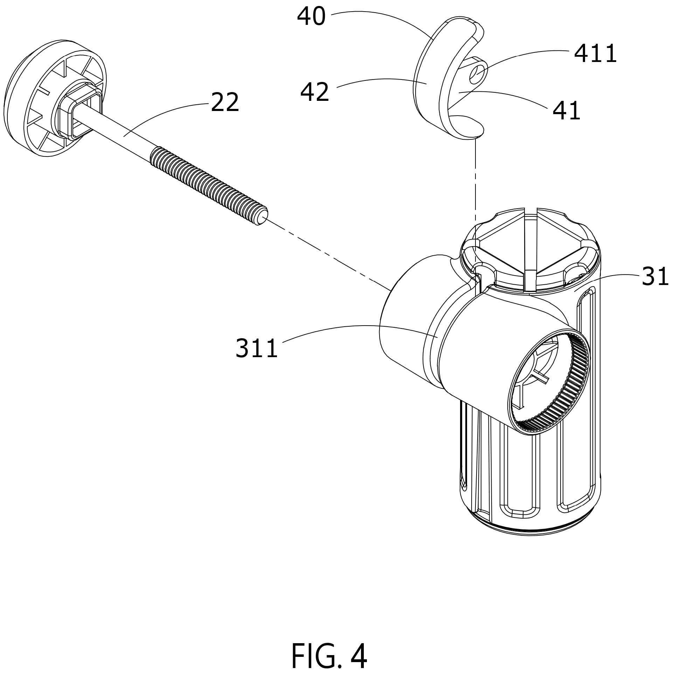

As shown in FIG. 4, the clamping device for cargo racks 10 further includes a locking element 40, which adopts a C-shaped hook structure and primarily includes a connecting lug 41 and an arcuate body 42. The connecting lug 41 is formed with a through hole 411 for the tensioning screw rod 22 to pass through and fixed connection. The connecting lug 41 may be inserted into the longitudinal opening 311 of the clamping sleeve 31. Due to the specific thickness of the connecting lug 41, the connecting lug 41 may prevent over-contraction of the longitudinal opening 311 of the clamping sleeve 31. The thickness of the connecting lug 41 serves as a physical limit to prevent over-contraction of the longitudinal opening 311. Even if the operator over-rotates the adjustment assembly 20, the structural configuration of the connecting lug 41 may prevent the clamping sleeve 31 from applying excessive clamping force to the clamping inner tube 32, thus avoiding damage to the clamping inner tube 32 or the cargo rack tube positioned within the clamping inner tube 32.

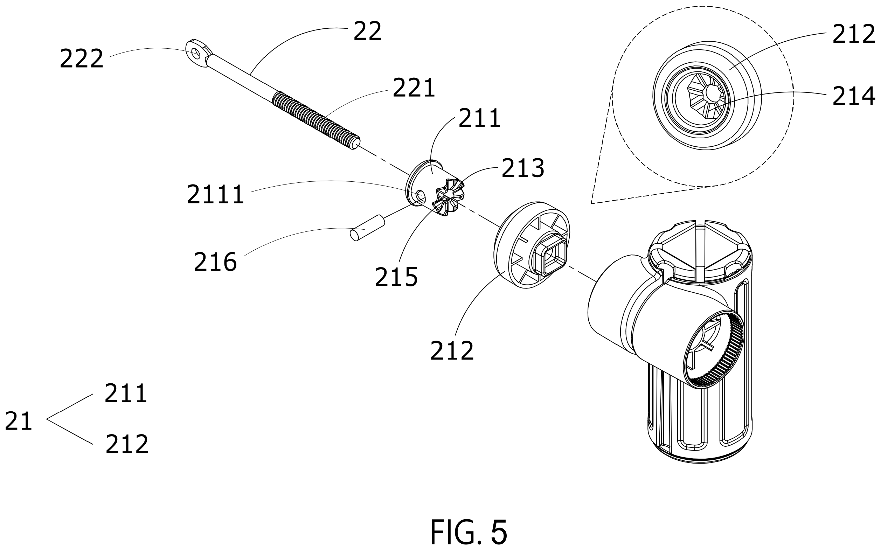

As shown in FIG. 5, in one implementation, the fixing element 21 includes a first component 211 and a second component 212. The dashed area in FIG. 5 shows the structure of the other side of the second component 212. The first component 211 has a disc shape with a star-shaped first serrated structure 213 at the center of the surface. These serration structures are uniformly distributed in a radial pattern. The first component 211 is provided with a circular through hole 215 for connecting and fixing the tensioning screw rod 22. In one implementation, the end of the tensioning screw rod 22 distal from the threaded section 221 is formed with a fixing hole 222, while the exterior of the first component 211 is formed with a corresponding fixing hole 2111 that communicates with the circular through hole 215. When the tensioning screw rod 22 passes through the circular through hole 215, a pin 216 may simultaneously penetrate the fixing hole 222 and the corresponding fixing hole 2111, establishing a fixed relationship between the tensioning screw rod 22 and the first component 211 to prevent their separation. The front central area of the second component 212 is designed with a second serrated structure 214 that matches the first serrated structure 213. These serrated structures adopt a recessed design with shapes and dimensions corresponding to the protruding portions of the first serrated structure 213. The overall shape of the second component 212 is disc-like with multiple support structures around the periphery to enhance the overall rigidity. When the two components are assembled, the first serrated structure 213 meshes precisely with the second serrated structure 214. The side surfaces of the serration structures form contact interfaces that bear against one another when rotational force is applied, effectively preventing relative rotation between the two components. The number and distribution of the serration structures allow the fixing element 21 to lock securely at multiple angular positions, such that precise angular adjustment is enabled. This configuration maintains structural stability under vibrations and impacts, such that the clamping device remains unaffected by angular shifts during various operating conditions.

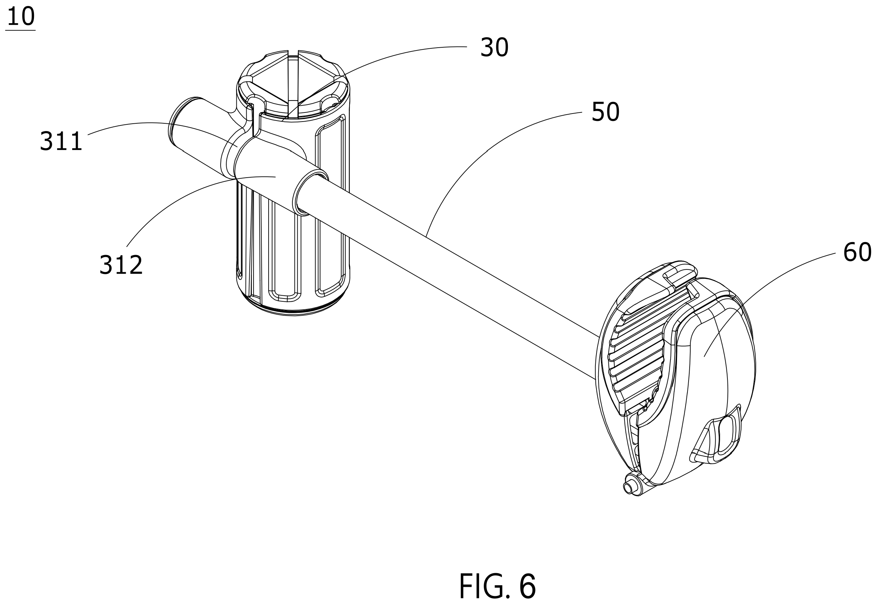

As shown in FIG. 6, in another implementation, the clamping device for cargo racks 10 further includes an extension connecting rod 50. One end of the extension connecting rod 50 is tightly connected to the branch connector 312 of the adjustable clamping device 30, and the other end is connected to a clamping connector 60. Referring to FIG. 5 and FIG. 6, the tensioning screw rod 22 extends from the branch connector 312, passes through the internal space of the extension connecting rod 50, and connects to the clamping connector 60. When the clamping connector 60 is rotated, the internal threaded mating component rotates accordingly. Since one end of the tensioning screw rod 22 is fixed to the fixing element 21 within the adjustable clamping device 30, the rotational motion of the threaded mating component is converted into axial linear displacement of the tensioning screw rod 22, thus adjusting the width of the longitudinal opening 311 and achieving precise control of the clamping force. The extension connecting rod 50 allows more flexible installation, such that the clamping connector 60 is enabled to be positioned farther from the cargo rack as needed, thus facilitating more convenient operation and adjustment.

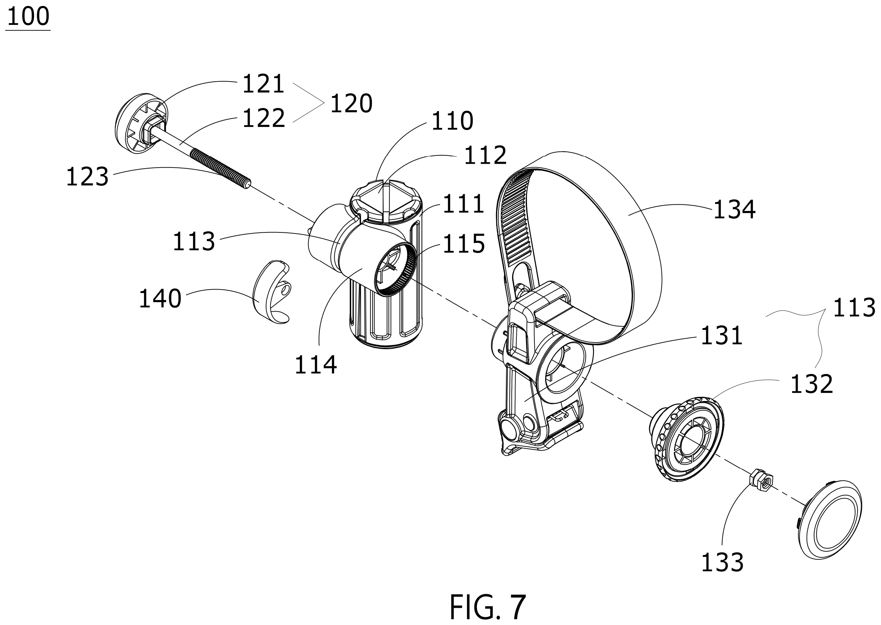

As shown in FIG. 7, the present disclosure also provides a fixing system 100 for bicycle cargo racks, primarily used for installation on cargo rack tubes to achieve secure attachment of a bicycle. The fixing system 100 for bicycle cargo racks primarily includes an adjustable clamping device 110, an adjustment assembly 120, and a clamping connector 130. The adjustable clamping device 110 includes a clamping sleeve 111 and a clamping inner tube 112. The clamping sleeve 111 includes a longitudinal opening 113 extending along the length, which imparts elastic deformation characteristics. A side wall of the clamping sleeve 111 is integrally formed with an outwardly extending branch connector 114 for connecting another component. The clamping inner tube 112 may be fitted over a cargo rack tube, and the clamping sleeve 111 is mounted over the exterior of the clamping inner tube 112. The adjustment assembly 120 primarily includes a fixing element 121 and a tensioning screw rod 122. One end of the tensioning screw rod 122 includes a threaded section 123, while the other end is firmly connected to the fixing element 121. A locking element 140 with a C-shaped structure is disposed at an intermediate portion of the tensioning screw rod 122 and is configured for insertion into the longitudinal opening 113 of the clamping sleeve 111 to limit the opening width. The clamping connector 130 includes a fixing base 131 and a knob 132. The fixing base 131 is directly connected to the other end of the branch connector 114, while the knob 132 is mounted on one side of the fixing base 131 and may rotate relative to the fixing base 131. The knob 132 is assembled with a threaded mating component 133, which threadedly engages the threaded section 123 of the tensioning screw rod 122. A strap 134 is provided above the clamping connector 130, which has an annular structure and is specifically designed for securing bicycles. The fixing base 131 is connected to the branch connector 114 in an angle-adjustable manner, such that a user is enabled to adjust the angle of the fixing base 131 so that the knob 132 is oriented toward a tube of the bicycle. When the strap 134 secures the bicycle to the fixing base 131, the tube of the bicycle forms a physical obstruction against the knob 132, such that a structural anti-theft function is achieved.

As described above, during operation of the fixing system 100 for bicycle cargo racks, the tensioning screw rod 122 passes through the branch connector 114 and extends to the clamping connector 130. When the knob 132 is rotated, the threaded mating component 133 rotates accordingly. Since one end of the tensioning screw rod 122 is fixed to the fixing element 121, axial displacement is generated. This axial displacement is transmitted to the clamping sleeve 111 to adjust the width of the longitudinal opening 113, thus controlling the tightening degree of the clamping sleeve 111 against the clamping inner tube 112, such that the entire system is enabled to be securely fixed to the cargo rack.

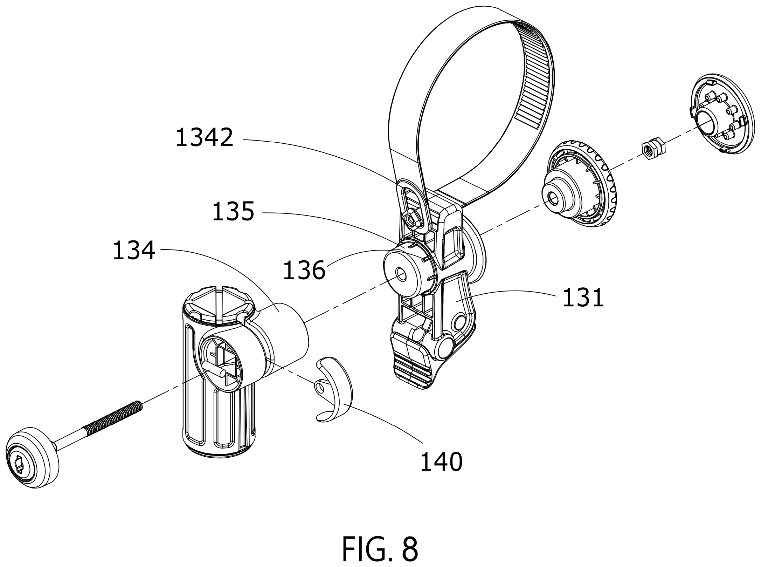

Referring to FIG. 8 in conjunction with FIG. 7, in one implementation, one side of the fixing base 131 of the fixing system 100 for bicycle cargo racks is provided with an integrally formed connecting tube body 135. The connecting tube body 135 has a cylindrical shape and is used for insertion and fixation at the end of the branch connector 114, such that the fixing base 131 is enabled to be securely connected to the branch connector 114 and form a stable connection. As shown in FIG. 8, an outer surface of the connecting tube body 135 is provided with a plurality of uniformly distributed first protruding structures 136, which present specific shapes and dimensions. Correspondingly, an inner wall of the branch connector 114 is provided with a plurality of second protruding structures 115 whose positions and shapes match the first protruding structures 136. When the connecting tube body 135 is inserted into the branch connector 114, the first protruding structures 136 mesh with the second protruding structures 115, which not only effectively enhances the stability of the connection but also forms multiple predetermined angular limiting positions. That is, the fixing base 131 may rotate relative to the branch connector 114 within a limited angular range and may be automatically positioned and locked at specific preset angles. Operators may adjust the angular position of the fixing base 131 based on actual requirements. Once the desired angle is reached, the system automatically locks in place, such that unintended rotation caused by vibrations or external forces during use is prevented. The most suitable fixing angle may be selected depending on the bicycle type and specific loading requirements.

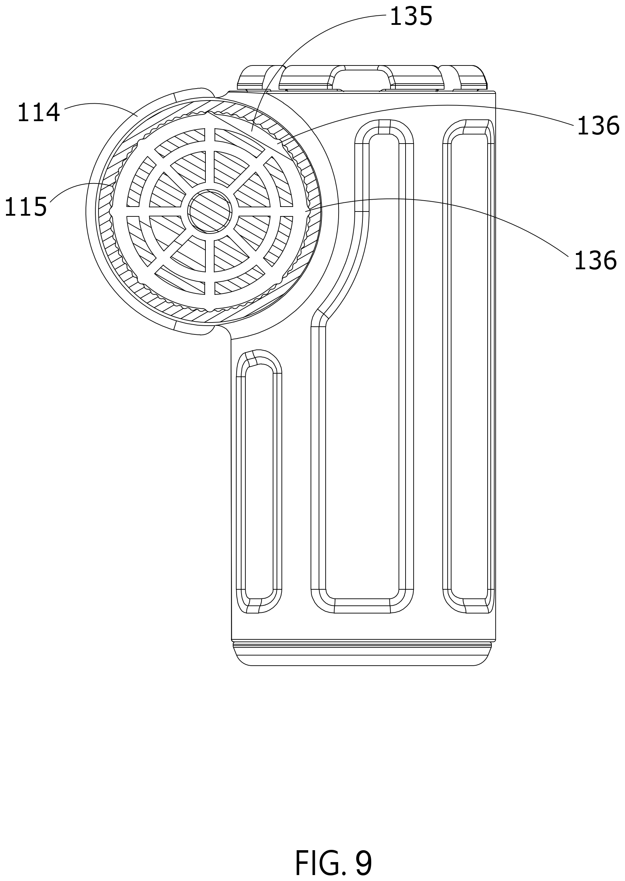

Referring to FIG. 9, a sectional view illustrates the detailed mating condition of internal structures when the connecting tube body 135 and the branch connector 114 are combined. As shown in FIG. 9, the outer surface of the connecting tube body 135 is provided with annularly arranged first protruding structures 136, which present wedge-shaped or tooth-shaped designs and are uniformly distributed along the circumferential direction. Correspondingly, the inner wall of the branch connector 114 is provided with matching second protruding structures 115 configured to mesh with the first protruding structures 136. FIG. 9 particularly reveals the details of mutual engagement between the two sets of protruding structures (136, 115). When the connecting tube body 135 is inserted into the interior of the branch connector 114, the first protruding structures 136 fit precisely into grooves between the second protruding structures 115, forming a locking mechanism that maintains stable connection between the two components at specific angular positions. FIG. 9 also clearly illustrates the sectional shapes of the protruding structures, each of which adopts an inclined design. The key advantage of this design is that it enables the connecting tube body 135 to rotate relative to the branch connector 114 under a certain level of resistance, as the inclined surfaces may slide over opposing protrusions. At the same time, when the protrusions on both sides are fully aligned, a clear positioning effect is achieved. This configuration allows the fixing base to achieve reliable limiting fixation relative to the branch connector at multiple predetermined angular positions, while still permitting angular adjustment as needed. Notably, the tight engagement between the first protruding structures 136 and the second protruding structures 115 is critical to the anti-theft function of the present disclosure. Through this structure, the connecting tube body 135 is securely locked within the branch connector 114 and is capable of resisting substantial external torsional forces. This means that once the user has set the anti-theft angle, the engagement between the first protruding structures 136 and the second protruding structures 115 prevents unintended rotation of the connecting tube body 135 relative to the branch connector 114, such that the entire clamping connector cannot be forcibly rotated by external forces to defeat the anti-theft state.

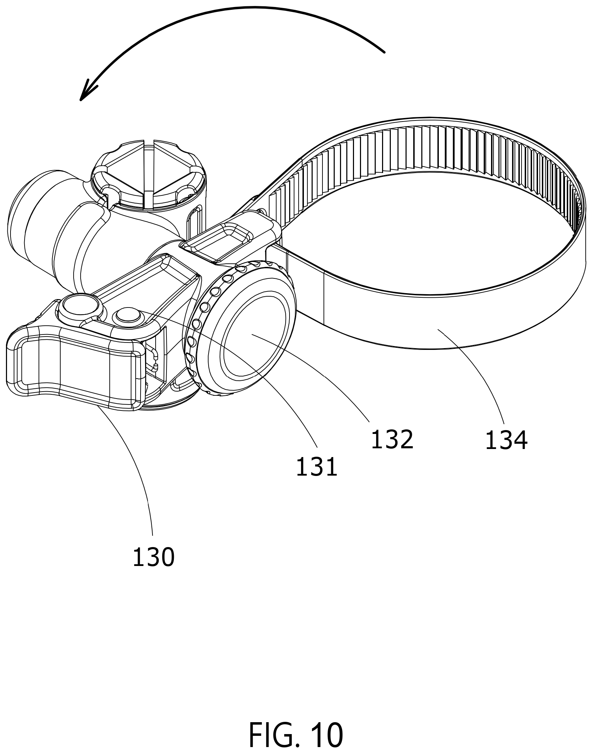

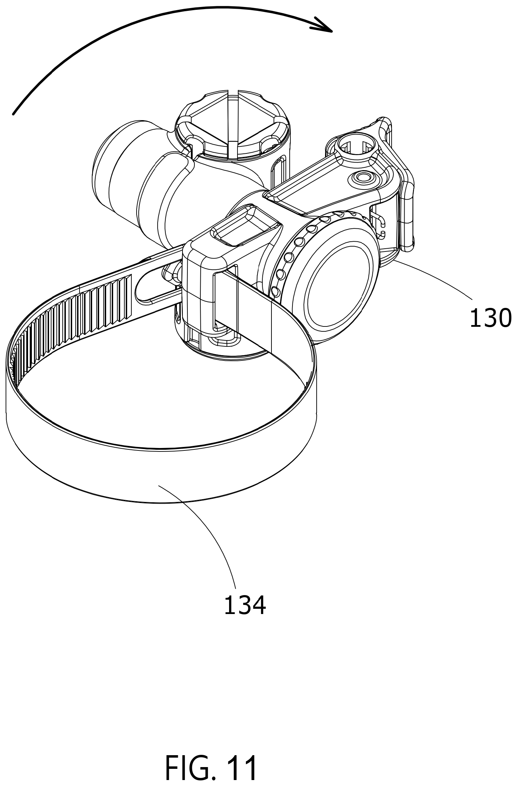

FIG. 10 and FIG. 11 show different angular positions of the connecting tube body 135 relative to the branch connector 114. These figures intuitively demonstrate the angular adjustment capability of the fixing system 100 for bicycle cargo racks, such that the clamping connector 130 is allowed to accommodate various installation requirements. Referring to FIG. 10 in conjunction with FIG. 7 and FIG. 8, the connecting tube body 135 is integrally formed with the fixing base 131. When the fixing system 100 is set at a specific angular position, the entire clamping connector 130 is inclined toward the left side, and the strap 134 is oriented horizontally, meeting particular requirements for securing bicycles. The knob 132 is arranged on one side of the fixing base 131 and serves as an operating component for angular adjustment. The connecting tube body 135 is inserted into one end of the branch connector 114, forming a rotational interface that permits angular variation. In contrast, FIG. 11 shows another angular position in which the connecting tube body 135 has rotated relative to the branch connector 114, resulting in the entire clamping connector 130 tilting toward the right side and the strap 134 adjusting to a different angle. This angular adjustment mechanism provides flexibility for adapting to different installation environments and bicycle securing needs. By selecting a suitable angular position, operators may achieve an optimal attachment configuration according to the bicycle type, the structural characteristics of the cargo rack, and individual preferences, thus enhancing stability and reliability of bicycle fixation. More specifically, the user may utilize this angular adjustment function to configure the anti-theft setting. Referring to FIG. 10, the user may rotate the clamping connector 130 so that the fixing base 131 is positioned at a specific angle, such that the knob 132 is oriented toward a specific direction (for example, toward the bicycle mounting space). When the strap 134 secures the bicycle to the fixing base 131, the area in front of the knob 132 is obstructed by the bicycle. Similarly, FIG. 11 shows the clamping connector 130 rotated to another angle, with the knob 132 correspondingly reoriented. By adjusting the knob 132 to face the bicycle frame, the bicycle frame may serve as a physical obstruction that restricts the operating space of the knob 132, such that the anti-theft purpose is achieved.

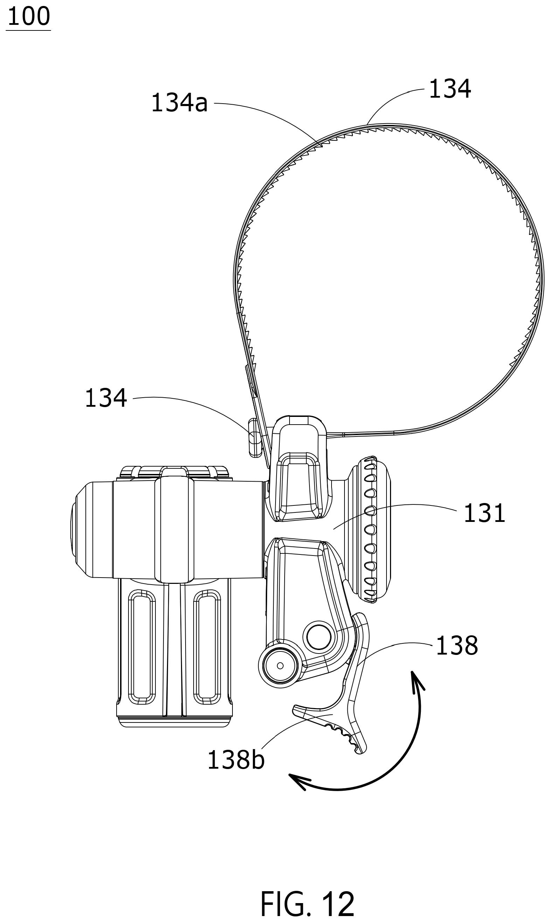

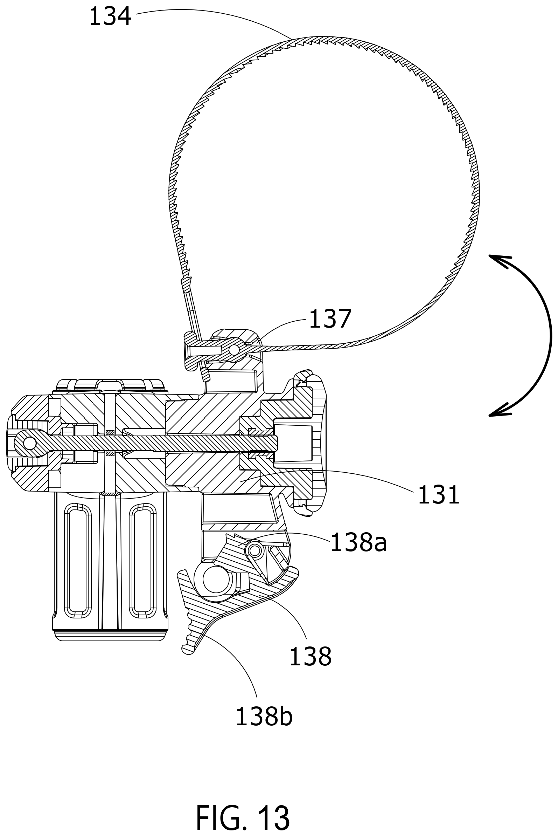

Referring to FIG. 12 and FIG. 13, FIG. 12 shows an external view of the fixing system 100 for bicycle cargo racks, and FIG. 13 provides a sectional view revealing internal structural details. As shown in FIG. 12, the strap 134 has a detachable annular design. Fine serrated structures 134a are uniformly distributed along the entire inner circumference of the strap 134. The sectional view in FIG. 13 illustrates the serrated structures 134a in detail. The inclined shape of each serrated structure allows the strap 134 to slide in one direction. An upper portion of the fixing base 131 is formed with a through hole 137 through which the strap 134 passes. FIG. 13 illustrates the internal configuration of the through hole 137 and the path taken by the strap 134. A bottom portion of the fixing base 131 includes an engaging assembly 138, which includes an engaging structure 138a configured to mesh with the serrated structures 134a and a release portion 138b designed for manual operation. When the release portion 138b is moved in the direction of the indicated arrow, the engaging structure 138a disengages from the serrated structures 134a, thus releasing the locked state. During operation, the strap 134 passes through the through hole 137, encircles a bicycle component, and folds back to engage the serrated structures 134a with the engaging structure 138a of the engaging assembly 138. This configuration provides secure attachment and enables quick release via manual actuation of the release portion 138b. Referring to FIG. 12, in one implementation, one end of the strap 134 includes a fastening structure 1341, and the other end includes a fastening hole 1342 (refer to FIG. 7). When the strap 134 is inserted into the through hole 137 of the fixing base 131, the fastening hole 1342 engages with the fastening structure 1341, causing the strap 134 to form a closed loop, such that the strap 134 is allowed to be conveniently stored on the fixing base 131 when not in use.

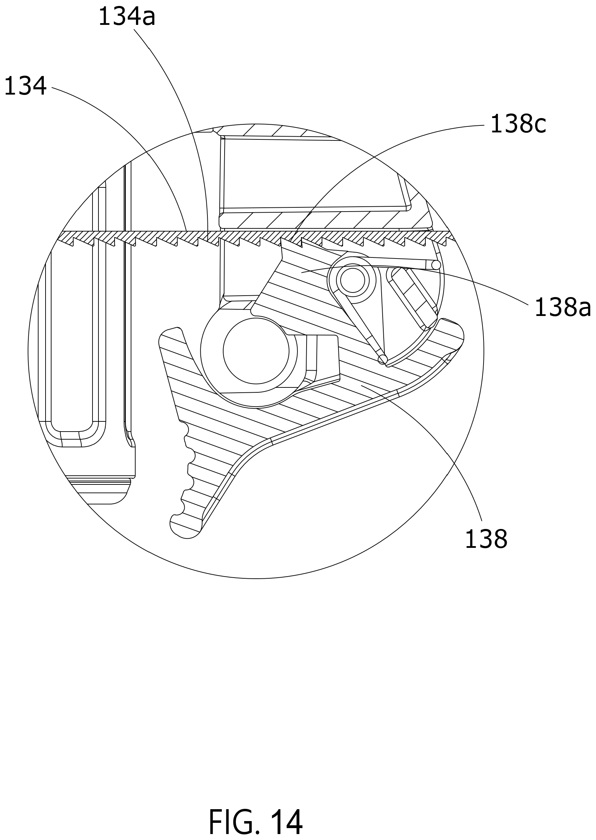

Referring to FIG. 14, in one implementation, the engaging assembly 138 includes serrated structures 138c that correspond to the serrated structures 134a formed on the inner surface of the strap 134. FIG. 14 presents an enlarged view detailing the engagement between the engaging assembly 138 and the strap 134. The serrated structures 134a are arranged at specific angles and feature a unidirectional inclined design. Correspondingly, the engaging structure 138a of the engaging assembly 138 is equipped with serrated structures 138c having matching geometry and orientation. These corresponding serrated structures 138c mesh precisely with the serrated structures 134a of the strap 134, thus ensuring a secure and stable interlock.

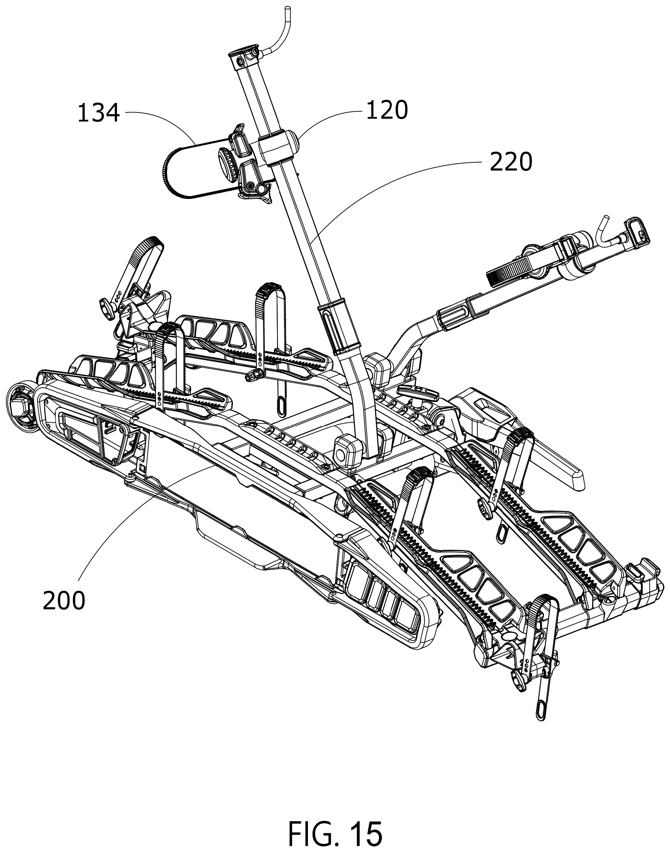

Referring to FIG. 15, the cargo rack 200 is configured for carrying and securing bicycles. The fixing system 100 for bicycle cargo racks is mounted on a support tube 220 of the cargo rack by means of a clamping inner tube (not labeled), and secure fixation is achieved through operation of the adjustment assembly 120. The strap 134 extends from an upper portion of the fixing base 131 and may wrap around bicycle frames or associated components to accomplish reliable securing. FIG. 15 visually illustrates the installed configuration of the disclosed system in a practical application scenario, highlighting features, such as compact structure, ease of installation, and high compatibility. These characteristics provide a safe and dependable securing solution for bicycle transport.

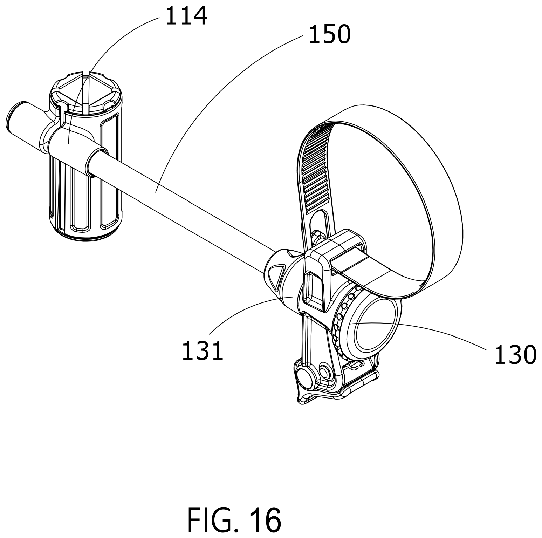

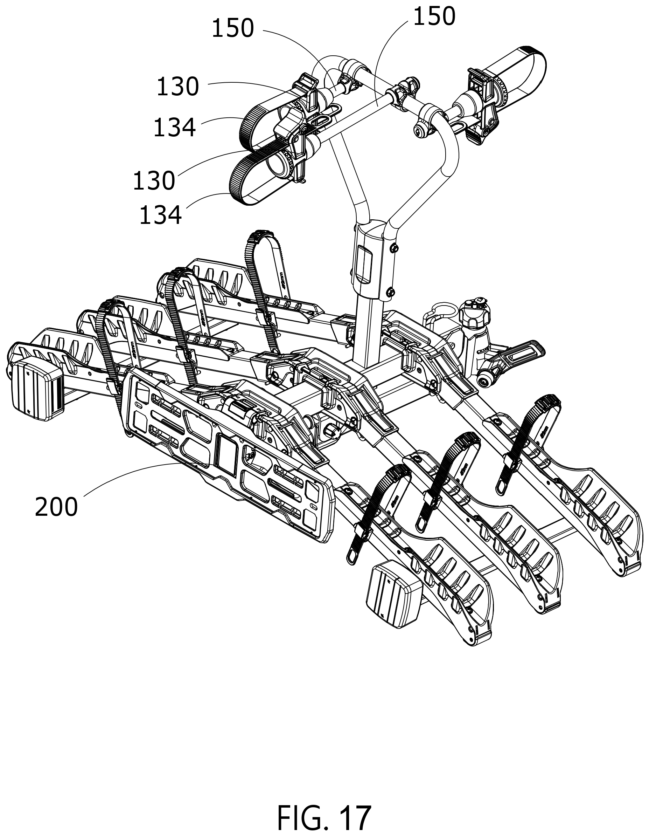

Referring to FIG. 16, another implementation of the fixing system 100 for bicycle cargo racks primarily incorporates an extension connecting rod 150. Referring also to FIG. 7, the extension connecting rod 150 has a tubular structure, with one end tightly connected to the branch connector 114 and the other end connected to the fixing base 131 of the clamping connector 130. The tensioning screw rod 122 extends from the adjustable clamping device 110, passes through the entire internal passage of the extension connecting rod 150, and connects to the clamping connector 130. Integration of the extension connecting rod 150 substantially enhances the flexibility and adaptability of the fixing system 100, such that positioning of the clamping connector 130 is enabled at a location remote from the adjustable clamping device 110. This configuration facilitates user operation of the adjustment mechanism from more convenient angles or positions without altering the original clamping location. In addition, the inclusion of the extension connecting rod 150 enables the fixing system 100 to accommodate a wider range of cargo rack and bicycle combinations, thus offering expanded installation possibilities. The configuration of the fixing system 100 with the extension connecting rod 150 mounted on the cargo rack 200 is illustrated in FIG. 17. As shown in FIG. 17, the extension connecting rod 150 not only increases structural flexibility, but also allows precise positioning of attachment points at optimal locations on the bicycle frame, without interference from the structural constraints of the cargo rack. FIG. 17 further illustrates an example where two clamping connectors 130 are arranged at different locations on the bicycle, with each strap 134 encircling and securing the bicycle frame at a respective point. This multi-point securing configuration ensures that the bicycle remains stable and securely fixed during vehicle operation, such that shaking or loosening under dynamic conditions is prevented.

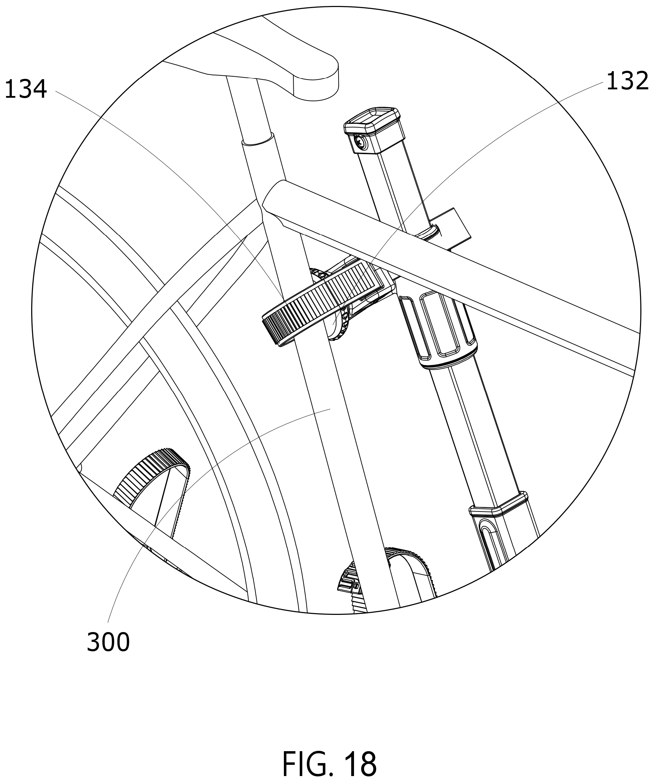

Referring to FIG. 18, a schematic view illustrating the anti-theft locked state of the present disclosure is shown. When the strap 134 secures a bicycle frame 300 to the system, the knob 132 is positioned adjacent to the bicycle frame 300. Since the distance between the knob 132 and the bicycle frame 300 is minimal or the two are in contact with each other, the bicycle frame 300 substantially obstructs the rotational path of the knob 132. In this state, a user cannot effectively grip or rotate the knob 132 to loosen the device without first removing the bicycle frame 300, such that anti-theft effectiveness is achieved.

The operational procedure of the anti-theft function of the present disclosure is as follows. First, the user fits the clamping inner tube 112 over a tube of the cargo rack and secures the adjustable clamping device 110 to the cargo rack through the adjustment assembly 120. Next, the user rotates the fixing base 131 to adjust the angle of the clamping connector 130 so that the knob 132 is oriented toward the direction of the bicycle tube. The user then secures the bicycle to the fixing base 131 using the strap 134, at which point the bicycle tube is positioned extremely close to or in contact with the knob 132. In this state, to loosen the adjustable clamping device 110, the bicycle must first be removed before the knob 132 can be operated, such that the effect of using the bicycle structure itself as an anti-theft barrier is achieved, and a structural anti-theft function is realized without requiring additional locks.

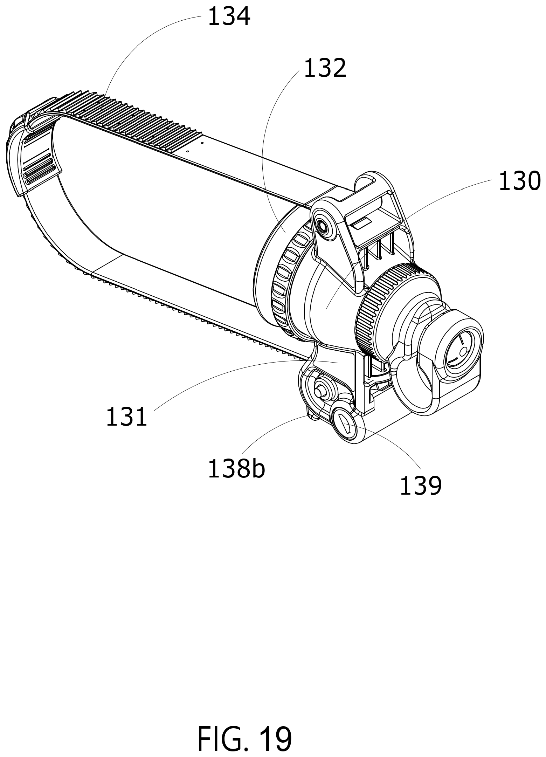

To further enhance the anti-theft security of the present disclosure, the clamping connector 130 may be configured with a dual anti-theft mechanism. Referring to FIG. 19, a perspective view of an advanced implementation of the clamping connector 130 of the present disclosure is shown. As illustrated in FIG. 19, the clamping connector 130 similarly includes the fixing base 131, the knob 132, the strap 134, and the release portion 138b for releasing the engagement state of the strap.

In particular, in this implementation, the fixing base 131 is further provided with a locking unit 139 (for example, a key-operated lock cylinder mechanism) at or adjacent to the pivot location of the release portion 138b. The locking unit 139 may be locked or unlocked by an external key. When the locking unit 139 is in a locked state, the internal mechanical structure of the locking unit 139 interferes with or restricts the actuation path of the release portion 138b, such that the release portion 138b cannot be manually operated.

When this design is combined with the physical obstruction mechanism described in connection with FIG. 18, a highly secure anti-theft effect is achieved. First, the bicycle frame 300 is secured by the strap 134, causing the bicycle frame 300 to obstruct the knob 132 (first level of structural anti-theft). Next, the locking unit 139 is locked with a key, such that the release portion 138b cannot be actuated (second level of lock-based anti-theft). In this state, an unauthorized person can neither operate the release portion 138b to release the strap 134 and remove the bicycle, nor rotate the knob 132 to disassemble the entire fixing system 100 due to the obstruction by the bicycle frame 300. The locking unit 139 must be unlocked with the dedicated key, the strap 134 released, and the bicycle removed before the knob 132 can be operated, such that the user is provided with the highest level of security.

In summary, the fixing system 100 for bicycle cargo racks of the present disclosure primarily includes an adjustable clamping device 110, an adjustment assembly 120, and a clamping connector 130, such that installation is enabled on tubes of various cargo racks 200. Tight cooperation between the clamping sleeve 111 and the clamping inner tube 112, combined with the use of the strap 134 and the fixing base 131, achieves the bicycle securing system of the present disclosure characterized by ease of installation, stability, reliability, and broad applicability. Precise interaction between the tensioning screw rod 122 and the threaded mating component 133, together with the optional extension connecting rod 150, further enhances adaptability and operational convenience of the fixing system under different usage environments.

The above detailed description of implementations of the present disclosure has been provided with reference to the drawings. However, the specific construction is not limited to these implementations and may include design modifications within the claimed subject-matter. Furthermore, various modifications may be made within the claimed subject-matter, and implementations obtained by appropriately combining technical means disclosed in different implementations are also included. Moreover, alternative constructions obtained by exchanging elements described in the above implementations that achieve the same effects are also included.

## Claims

1. An anti-theft bicycle cargo rack fixing system (100) for securing a bicycle to a cargo rack (200), the anti-theft bicycle cargo rack fixing system (100) comprising:
an adjustable clamping device (110) for connecting to the cargo rack (200);
an adjustment assembly (120) having a tensioning screw rod (122) connected to the adjustable clamping device (110); and
a clamping connector (130) connected to the adjustable clamping device (110) and provided with a fixing base (131), a strap (134), and a knob (132), wherein the knob (132) is operatively linked to the tensioning screw rod (122), such that when the knob (132) is operated, the knob (132) drives the tensioning screw rod (122) that causes the adjustable clamping device (110) to generate a clamping force;
wherein the fixing base (131) is connected to the adjustable clamping device (110) in an angle-adjustable manner for setting an orientation of the knob (132) relative to the bicycle, and when the strap (134) secures the bicycle to the fixing base (131), a tube of the bicycle is positioned adjacent to the knob (132), such that a physical obstruction is formed against the knob (132) that prevents the knob (132) from being rotated to loosen the adjustable clamping device (110).

2. The anti-theft bicycle cargo rack fixing system (100) of claim 1, wherein the adjustable clamping device (110) comprises a clamping sleeve (111) and a clamping inner tube (112), the clamping sleeve (111) has a longitudinal opening (113) and is fitted over an exterior of the clamping inner tube (112), a side wall of the clamping sleeve (111) is provided with a branch connector (114), the adjustment assembly (120) further comprises a fixing element (121), one end of the tensioning screw rod (122) is fixed to the fixing element (121) and passes through the branch connector (114), the fixing base (131) is connected to the branch connector (114), and when the knob (132) is operated, axial displacement of the tensioning screw rod (122) adjusts a width of the longitudinal opening (113) and further controls a tightening degree of the clamping sleeve (111) against the clamping inner tube (112).

3. The anti-theft bicycle cargo rack fixing system (100) of claim 2, wherein one side of the fixing base (131) is provided with a connecting tube body (135) inserted into and fixed to the branch connector (114), an outer surface of the connecting tube body (135) is provided with a plurality of first protruding structures (136), an inner wall of the branch connector (114) is provided with a plurality of corresponding second protruding structures (115), and the first protruding structures (136) and the second protruding structures (115) engage with each other to form a plurality of angular limiting positions, such that the fixing base (131) is rotatable relative to the branch connector (114) and is capable of twist-resistant locking fixation.

4. The anti-theft bicycle cargo rack fixing system (100) of claim 2 or 3, further comprising: an engagement element (140) having a connecting lug (41), wherein the connecting lug (41) has a through hole (411), the tensioning screw rod (122) passes through the through hole (411) and is firmly connected to the connecting lug (41), the connecting lug (41) of the engagement element (140) is inserted into the longitudinal opening (113) of the clamping sleeve (111), and when the tensioning screw rod (122) generates the axial displacement, the engagement element (140) is driven to move, and a thickness of the connecting lug (41) serves to limit a minimum opening degree of the longitudinal opening (113).

5. The anti-theft bicycle cargo rack fixing system (100) of any one of claims 2 to 4, wherein the fixing element (121) comprises a first component (211) and a second component (212), a surface of the first component (211) is provided with a plurality of radially arranged first serrated structures (213), a corresponding surface of the second component (212) is provided with a plurality of radially arranged second serrated structures (214), and the plurality of radially arranged first serrated structures (213) and the plurality of radially arranged second serrated structures (214) engage with each other to form a locking structure that prevents relative rotation between the first component (211) and the second component (212).

6. The anti-theft bicycle cargo rack fixing system (100) of any one of claims 1 to 5, wherein the strap (134) is detachable, an inner surface of the strap (134) is provided with a plurality of serrated structures (134a), an upper portion of the fixing base (131) is provided with a through hole (137) for the strap (134) to pass through, and a bottom portion of the fixing base (131) is provided with an operable engaging assembly (138), the engaging assembly (138) comprises an engaging structure (138a) that cooperates with the plurality of serrated structures (134a) of the strap (134) and a manually operable release portion (138b), wherein the strap (134) passes through the through hole (137) and is folded back, such that the plurality of serrated structures (134a) of the strap (134) engage with the engaging assembly (138).

7. The anti-theft bicycle cargo rack fixing system (100) of claim 6, wherein one end of the strap (134) is provided with a fastening structure (1341) and another end of the strap (134) is provided with a fastening hole (1342), and after the strap (134) is inserted into the through hole (137) of the fixing base (131), the fastening hole (1342) engages with the fastening structure (1341) for fixation, such that the strap (134) forms a closed loop.

8. The anti-theft bicycle cargo rack fixing system (100) of any of claims 1 to 7, further comprising: an extension connecting rod (150), wherein one end of the extension connecting rod (150) is connected to the adjustable clamping device (110) and another end of the extension connecting rod (150) is connected to the clamping connector (130), and the tensioning screw rod (122) extends through the extension connecting rod (150) to the clamping connector (130) to be operatively linked to the knob (132).
